# FASCICULE DE BREVET EUROPEEN

(11) **EP 3 585 649 B1**
(45) Date de publication et mention de la délivrance du brevet: **28.07.2021**
(21) Numéro de dépôt: 18710087.0
(22) Date de dépôt: 15.01.2018
(51) Int. Cl.: B60R 1/00, B60J 5/04

(54) **RETROVISEUR EXTERIEUR DE VEHICULE AUTOMOBILE SUPPORTANT UNE GARNITURE DE PORTE**
AUSSENRÜCKSPIEGEL FÜR EIN KRAFTFAHRZEUG MIT UNTERSTÜTZUNG EINES TÜRLAUFKANALS
EXTERIOR REAR VIEW MIRROR FOR A MOTOR VEHICLE SUPPORTING A DOOR RUN CHANNEL

(30) Priorité: 24.02.2017 FR 1751498
(43) Date de publication de la demande: 01.01.2020
(73) Titulaire: PSA Automobiles SA, 78300 Poissy (FR)
(72) Inventeur: FIGENT, Michel, 25260 Longevelle sur Doubs (FR); LUKASIEWICZ, Stéphane, 25550 Bavans (FR)
(86) Numéro de dépôt international: PCT/FR2018/050087
(87) Numéro de publication internationale: WO 2018/154198

(56) Documents cités:
- DE-A1- 2 037 555
- FR-A1- 2 975 352
- JP-A- S59 220 429

## Description

L'invention a trait au domaine des véhicules automobiles, plus particulièrement aux portes avant d'un véhicule automobile.

Les portes avant d'un véhicule automobile sont généralement fixées de manière pivotante à un pilier avant. Elles comprennent une structure métallique incluant un cadre de vitre s'étendant vers le haut depuis un caisson, mais aussi un rétroviseur et une garniture de porte, couramment appelée coulisse, fixée sur le cadre de vitre à l'aide d'une pièce en tôle supplémentaire, et servant à étanchéifier la porte. Le rétroviseur, généralement situé à l'arrière de la garniture, est fixé sur la structure métallique.

Le document de brevet publié FR 2 975 352 montre le préambule de la revendication 1 et divulgue un dispositif de positionnement d'un rétroviseur extérieur pour un véhicule automobile. Le rétroviseur comprend une embase positionnée sur un support de la porte, ledit support étant surmonté par une garniture d'étanchéité ou coulisse. Le dispositif comprend des pattes situées sur l'embase et s'insérant dans des encoches formées dans la garniture. L'engagement des pattes dans les encoches exigent un certain soin, et donc un certain temps, lors des opérations d'assemblage. De plus, ce type de fixation impose à l'embase de rester en retrait par rapport au contour de la garniture, ce qui peut s'avérer limitant au niveau du style du véhicule.

L'invention a pour objectif de pallier au moins un des inconvénients de l'état de la technique susmentionné. Plus particulièrement, l'invention a pour objectif de faciliter le montage de la garniture sur la porte sans pour autant présenter des contraintes au niveau de la forme de l'embase qui peuvent s'avérer pénalisantes au niveau du style du véhicule.

L'invention a pour objet une porte avant de véhicule automobile, comprenant : une structure métallique avec un caisson et un cadre de vitre s'étendant vers le haut depuis le caisson, ledit cadre comprenant une portion avant et inférieure ; un rétroviseur extérieur avec une embase fixée à la portion avant et inférieure du cadre de vitre ; une garniture s'étendant le long d'une face supérieure du cadre de vitre jusqu'à la portion avant et inférieure dudit cadre ; remarquable en ce que l'embase s'étend vers l'avant au-delà de la portion avant et inférieure du cadre de vitre et est fixée à la garniture à l'avant de ladite portion.

La garniture est une garniture d'étanchéité avec la caisse du véhicule. Elle est couramment désignée « coulisse ».

Selon un mode avantageux de l'invention, la garniture comprend des premiers moyens de fixation à la portion avant et inférieure du cadre de vitre et des deuxièmes moyens de fixation à l'embase.

Selon un mode avantageux de l'invention, les premiers et/ou deuxièmes moyens de fixation sont du type pion à insertion dans un orifice.

Préférentiellement, les premiers et deuxièmes moyens de fixation sont positionnés sur une extrémité avant de la garniture.

Selon un mode avantageux de l'invention, la garniture comprend des troisièmes moyens de fixation à une feuillure de jonction de tôles située à l'avant de la portion avant et inférieure du cadre de vitre.

Selon un mode avantageux de l'invention, les troisièmes moyens de fixation forment une encoche chaussant la feuillure de jonction.

Selon un mode avantageux de l'invention, les premiers moyens de fixation sont situés à l'arrière des deuxièmes et troisièmes moyens de fixation, et coopèrent avec une face de la portion avant et inférieure du cadre de vitre qui est dirigée vers l'intérieur du véhicule.

Selon un mode avantageux de l'invention, la garniture comprend un support rigide formant l'encoche et une patte supportant les deuxièmes moyens de fixation. Le support rigide est avantageusement en métal.

L'invention a également pour objet un véhicule automobile comprenant au moins une porte avant, remarquable en ce que la porte avant est conforme à l'invention, et un tronçon de la garniture fixée à l'embase du rétroviseur et caché par ladite embase de sorte qu'un bord avant de ladite embase forme un bord de raccordement de finition avec une aile avant adjacente.

Préférentiellement, la distance entre le bord de raccordement de finition et l'aile avant est comprise entre 2 et 10 mm, et plus préférentiellement la distance est entre 3 et 7mm.

L'invention a également pour objet un procédé d'assemblage d'une porte avant de véhicule automobile, remarquable en ce que la porte est selon l'invention et le procédé comprend les étapes suivantes : montage de la garniture sur la face supérieure du cadre de porte et fixation de ladite garniture à une face intérieure de la portion avant et inférieure du cadre de vitre ; montage et fixation du rétroviseur sur la portion avant et inférieure du cadre de vitre ; fixation de la garniture à l'embase du rétroviseur. Les mesures de l'invention sont intéressantes en ce qu'elles facilitent le montage de la garniture sur la porte tout en permettant à l'embase de s'étendre devant la garniture. L'ajout d'un support rigide entre l'embase et la garniture permet d'améliorer la rigidité donc la tenue du rétroviseur. La fixation de l'extrémité avant de la garniture contre une face intérieure de l'embase du rétroviseur à également pour fonction d'améliorer l'aérodynamisme du véhicule, en favorisant la conception d'un nouveau design des portes latérales du véhicule. L'invention permet également de diminuer le temps de montage de la garniture sur la porte.

D'autres caractéristiques et avantages de la présente invention seront mieux compris à l'aide de la description et des dessins parmi lesquels :
- La figure 1 est une vue latérale de la partie avant d'une porte d'un véhicule automobile comprenant une garniture selon l'invention ;
- La figure 2 est une vue de l'embase d'un rétroviseur de la figure 1 ;
- La figure 3 montre l'extrémité avant de la garniture de la figure 1, vue de côté ;
- La figure 4 est une vue arrière de l'extrémité avant de la garniture de la figure 1 ;
- La figure 5 montre la garniture fixée sur l'embase du rétroviseur de la figure 1 ;
- La figure 6 est une vue en coupe horizontale de la porte de la figure 1, au niveau du rétroviseur.

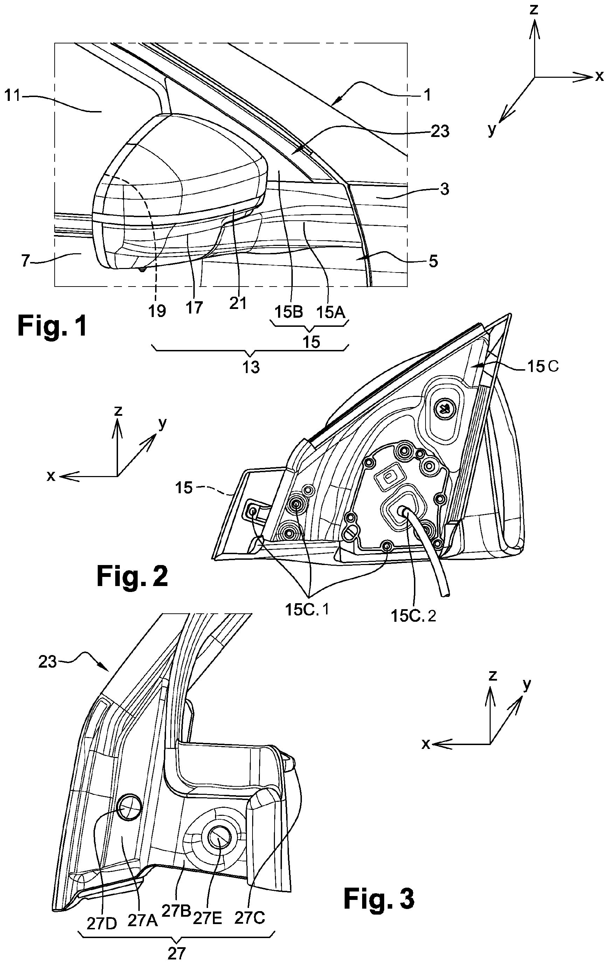

La figure 1 est une vue latérale de la partie avant d'une porte avant 5 d'un véhicule automobile 1, ladite porte 5 comprenant une garniture 23 selon l'invention est prolongée par une aile avant 3. On définit alors en référence au véhicule :
- une direction longitudinale (axe x) correspondant à la direction de déplacement du véhicule,
- une direction transversale (axe y), perpendiculaire à la direction du déplacement du véhicule, et horizontale,
- une direction verticale (axe z) perpendiculaire au plan (xy).

La porte 5 comprend une structure métallique formant un caisson 7 dans sa partie basse et un cadre de vitre 11 s'étendant vers le haut à partir dudit caisson 7. Ce cadre de vitre supporte la garniture 23, ladite garniture 23 formant un profilé. La porte 5 comprend en outre un rétroviseur extérieur 13 positionné à l'avant et en bas du cadre de vitre 11. Le rétroviseur 13 inclut une coque externe 17 à l'arrière de laquelle est inséré un miroir 19. Ladite coque 17 peut également comprendre un clignotant 21 permettant d'indiquer un changement de direction du véhicule 1 aux usagers. Le rétroviseur 13 est fixé sur la porte 5 par le biais d'une embase 15 comprenant une portion de raccordement de finition 15A s'étendant au-dessus, suivant la direction transversale y, de la garniture 23 jusqu'à l'aile avant 3 et un gousset 15B positionné au-dessus de la portion de raccordement 15A, ces deux éléments étant joints du côté intérieur par un support de l'embase 15C (visible en figure 2).

La figure 2 est une vue du support 15C de l'embase 15 du rétroviseur 13 de la figure 1. Le support 15C sert à la fixation du rétroviseur 13 sur la porte 5 et à la fixation de la garniture 23 sur l'embase 15 du rétroviseur 13. Ce support 15C comprend notamment un raccord pour le câble électrique 15C.2 servant entre autres à commander le positionnement du miroir 19, et des orifices de fixation 15C.1 qui vont accueillir des moyens de fixation de l'embase 15, par exemple du type vis.

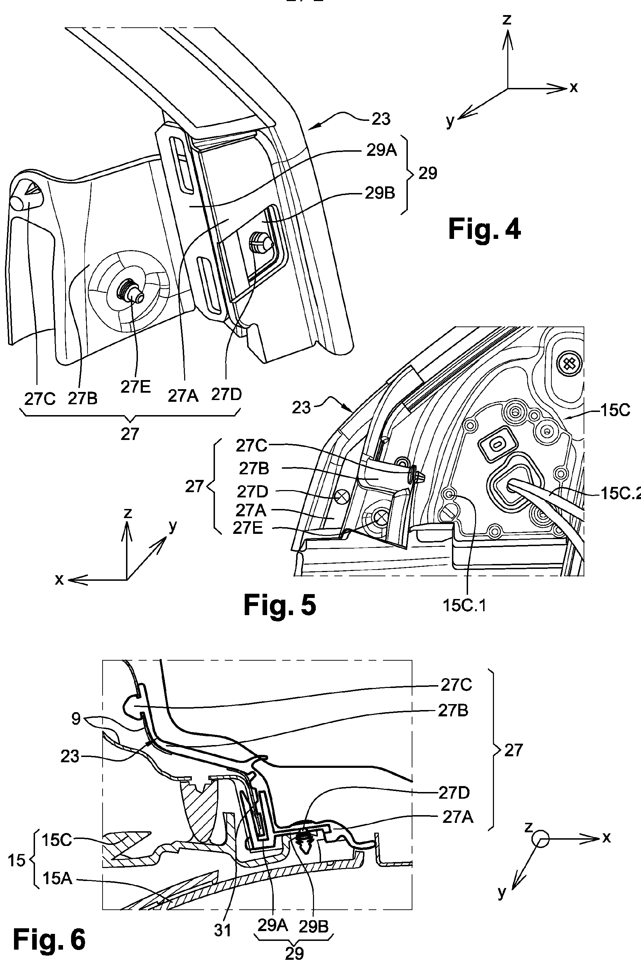

Les figures 3 et 4 montrent respectivement des vues de face et de l'arrière de la garniture 23 telle qu'à la figure 1. Le profilé de la garniture 23 comprend une extrémité avant 27 positionnée derrière l'embase 15suivant la direction transversale y. Cette extrémité 27 peut être subdivisée en une portion antérieure 27A positionnée au niveau d'une portion antérieure de l'embase 15 et une portion postérieure 27B s'étendant longitudinalement vers l'arrière depuis la portion antérieure 27A. Ces portions (27A, 27B) comprennent des moyens de fixation (27C, 27D, 27E), préférentiellement disposés dans des orifices de fixation prévus dans la garniture 23. Les premiers moyens de fixation (27C, 27E) permettent la fixation de la garniture 23 au cadre de vitre de la porte 5 tandis que les deuxièmes moyens de fixation 27D permettent la fixation de la garniture 23 à l'embase 15. Un support rigide 29, formant des troisièmes moyens de fixation, peut être ajouté afin d'améliorer la rigidité de la garniture 23. Ce support rigide 29 est alors fixé derrière, suivant la direction transversale y, ladite garniture 23 et positionné entre la garniture 23 et le support de l'embase 15. Ce support rigide 29 comprend une encoche 29A et une patte 29B, qui seront mieux décrites dans la figure 6.

La figure 5 montre la fixation de la garniture 23 sur le support 15C de l'embase 15 du rétroviseur 13. Cette fixation se fait selon les étapes suivantes. On monte la garniture 23 sur la face supérieure du cadre de porte 5, puis on fixe par les premiers moyens de fixation (27C, 27E) la garniture 23 à une face intérieure d'une portion avant et inférieure du cadre de vitre (montrée en figure 6). Ensuite on réalise le montage et la fixation du rétroviseur 13 sur la portion avant et inférieure du cadre de vitre. Enfin, la fixation de la garniture 23 à l'embase 15 du rétroviseur 13 est réalisée grâce aux deuxièmes moyens de fixation 27D. L'extrémité 27 de la garniture 23 est alors positionnée sur le support 15C, au niveau de la portion de raccordement 15A de l'embase 15 pour la portion antérieure 27A, et longitudinalement vers l'arrière du support 15C pour la portion postérieure 27B.

La figure 6 est une section de la porte 5 avec la garniture 23 selon l'invention. La porte 5 comprend une portion avant et inférieure du cadre de vitre 9 positionnée derrière l'embase 15, suivant la direction transversale y, et se terminant à l'avant par une feuillure de jonction de tôles 31. La garniture 23 est représentée fixée sur la portion avant et inférieure 9 du cadre de la vitre par un pion 27C des premiers moyens de fixation. Le support rigide 29 fixe la garniture 23 au support 15C de l'embase 15 sousjacent par le biais des deuxièmes moyens de fixation 27D. Ledit support rigide 29 comprend la patte 29B positionnée entre la garniture 23 et le support 15C, puis prolongée vers l'extérieur par l'encoche 29A. Cette encoche 29A a une section en forme de U chaussant la feuillure de jonction de tôles 31.

## Revendications

1. Porte avant (5) de véhicule automobile (1), comprenant :
- une structure métallique avec un caisson (7) et un cadre de vitre s'étendant vers le haut depuis le caisson (7), ledit cadre comprenant une portion avant et inférieure (9) ;
- un rétroviseur extérieur (13) avec une embase (15) fixée à la portion avant et inférieure (9) du cadre de vitre ;
- une garniture (23) s'étendant le long d'une face supérieure du cadre de vitre jusqu'à la portion avant et inférieure (9) dudit cadre ;
**caractérisée en ce que**
l'embase (15) s'étend vers l'avant au-delà de la portion avant et inférieure (9) du cadre de vitre et est fixée à la garniture (23) à l'avant de ladite portion (9).

2. Porte (5) selon la revendication 1, **caractérisée en ce que** la garniture (23) comprend des premiers moyens de fixation (27C, 27E) à la portion avant et inférieure (9) du cadre de vitre et des deuxièmes moyens de fixation (27D) à l'embase (15).

3. Porte (5) selon la revendication 2, **caractérisée en ce que** les premiers et/ou deuxièmes moyens de fixation (27C, 27D, 27E) sont du type pion à insertion.

4. Porte (5) selon l'une des revendications 2 et 3, **caractérisée en ce que** la garniture (23) comprend des troisièmes moyens de fixation (29A) à une feuillure de jonction de tôles (31) située à l'avant de la portion avant et inférieure (9) du cadre de vitre.

5. Porte (5) selon la revendication 4, **caractérisée en ce que** les troisièmes moyens de fixation (29A) forment une encoche (29A) chaussant la feuillure de jonction (31).

6. Porte (5) selon l'une des revendications 2 et 3 et selon l'une des revendications 4 et 5, **caractérisée en ce que** les premiers moyens de fixation (27C, 27E) sont situés à l'arrière des deuxièmes et troisièmes moyens de fixation (27D, 29A), et coopèrent avec une face de la portion avant et inférieure (9) du cadre de vitre qui est dirigée vers l'intérieur du véhicule (1).

7. Porte (5) selon les revendications 5 et 6, **caractérisée en ce que** la garniture (23) comprend un support rigide (29) formant l'encoche (29A) et une patte (29B) supportant les deuxièmes moyens de fixation (27D).

8. Véhicule automobile (1) comprenant au moins une porte avant (5), **caractérisé en ce que** la porte avant (5) est conforme à l'une des revendications 1 et 7, et un tronçon de la garniture (23) fixée à l'embase (15) du rétroviseur (13) et caché par ladite embase (15) de sorte qu'un bord avant de ladite embase (15) forme un bord de raccordement de finition avec une aile avant (3) adjacente.

9. Procédé d'assemblage d'une porte avant (5) de véhicule automobile (1), **caractérisé en ce que** la porte (5) est selon l'une des revendications 1 à 7 et le procédé comprend les étapes suivantes :
- montage de la garniture (23) sur la face supérieure du cadre de porte (5) et fixation de ladite garniture (23) à une face intérieure de la portion avant et inférieure (9) du cadre de vitre ;
- montage et fixation du rétroviseur (13) sur la portion avant et inférieure (9) du cadre de vitre ;
- fixation de la garniture (23) à l'embase (15) du rétroviseur (13).

## Patentansprüche

1. Vordertür (5) für ein Kraftfahrzeug (1) mit
- eine metallische Struktur mit einem Kasten (7) und einem sich von dem Kasten (7) nach oben erstreckenden Fensterrahmen, wobei der Rahmen einen vorderen und unteren Teil (9) aufweist;
- einem Außenspiegel (13) mit einer am vorderen und unteren Teil (9) des Fensterrahmens befestigten Basis (15);
- eine Verkleidung (23), die sich entlang einer Oberseite des Fensterrahmens bis zum vorderen und unteren Teil (9) des Rahmens erstreckt;
**dadurch gekennzeichnet, dass**
Der Sockel (15) erstreckt sich nach vorne über den vorderen und unteren Teil (9) des Fensterrahmens und ist an der Verkleidung (23) vor dem Teil (9) befestigt.

2. Tür (5) nach Anspruch 1, **dadurch gekennzeichnet, dass** die Verkleidung (23) erste Befestigungsmittel (27C, 27E) am vorderen und unteren Teil (9) des Fensterrahmens und zweite Befestigungsmittel (27D) am Sockel (15) aufweist.

3. Tür (5) nach Anspruch 2, **dadurch gekennzeichnet, dass** die ersten und/oder zweiten Befestigungsmittel (27C, 27D, 27E) vom Typ eines Einsatzstiftes sind.

4. Tür (5) nach einem der Ansprüche 2 und 3, **dadurch gekennzeichnet, dass** die Verkleidung (23) dritte Befestigungsmittel (29A) an einer Blechverbindungsfalte (31) aufweist, die vor dem vorderen und unteren Teil (9) des Fensterrahmens angeordnet ist.

5. Tür (5) nach Anspruch 4, **dadurch gekennzeichnet, dass** die dritten Befestigungsmittel (29A) eine Kerbe (29A) bilden, die den Verbindungsbogen (31) umschließt.

6. Tür (5) nach einem der Ansprüche 2 und 3 und nach einem der Ansprüche 4 und 5, **dadurch gekennzeichnet, dass** die ersten Befestigungsmittel (27C, 27E) hinter den zweiten und dritten Befestigungsmitteln (27D, 29A) angeordnet sind und mit einer nach innen gerichteten Fläche des vorderen und unteren Teils (9) des Fensterrahmens zusammenwirken des Fahrzeugs (1).

7. Tür (5) nach den Ansprüchen 5 und 6, **dadurch gekennzeichnet, dass** die Dichtung (23) einen starren Träger (29), der die Kerbe (29A) bildet, und eine Lasche (29B) umfasst, die die zweiten Befestigungsmittel (27D) trägt.

8. Kraftfahrzeug (1) mit mindestens einer Vordertür (5), **dadurch gekennzeichnet, dass** die Vordertür (5) einem der Ansprüche 1 und 7 entspricht, und ein Abschnitt der Verkleidung (23), der an der Basis (15) des Spiegels (13) befestigt und von der Basis (15) verdeckt ist, sodass eine Vorderkante der Basis (15) eine Kante bildet Abschlussverbindung mit einem angrenzenden vorderen Flügel (3).

9. Verfahren zum Zusammenbau einer Vordertür (5) eines Kraftfahrzeugs (1), **dadurch gekennzeichnet, dass** die Tür (5) nach einem der Ansprüche 1 bis 7 ist und das Verfahren die folgenden Schritte umfasst:
- Befestigung der Verkleidung (23) an der Oberseite des Türrahmens (5) und Befestigung der Verkleidung (23) an einer Innenseite des vorderen und unteren Teils (9) des Fensterrahmens;
- Montage und Befestigung des Spiegels (13) am vorderen und unteren Teil (9) des Fensterrahmens;
- Befestigung der Verkleidung (23) am Sockel (15) des Spiegels (13).

## Claims

1. Front door (5) of motor vehicle (1), including:
- a metal structure with a box (7) and a glass frame extending upwards from the box (7), the frame comprising a front and bottom portion (9);
- an exterior mirror (13) with a base (15) attached to the front and bottom portion (9) of the glass frame;
- a lining (23) extending along a top face of the glass frame to the front and bottom portion (9) of the glass frame;
**characterized by**
the base (15) extends forward beyond the front and bottom portion (9) of the glass frame and is attached to the lining (23) at the front of the glass frame (9).

2. Door (5) according to Claim 1, **characterized by** the fact that the lining (23) includes first means of fastening (27C, 27E) to the front and bottom portion (9) of the glass frame and second means of fastening (27D) to the base (15).

3. Door (5) according to Claim 2, characterized as the first and/or second means of fixation (27C, 27D, 27E) are of the type insert pawn.

4. Door (5) according to one of claims 2 and 3, **characterized by** the fact that the lining (23) includes third means of fastening (29A) to a sheet junction sheet (31) located at the front of the front and bottom portion (9) of the glass frame.

5. Door (5) according to Claim 4, **characterized by** the fact that the third means of attachment (29A) form a notch (29A) bearing the junction strip (31).

6. Door (5) according to one of Claims 2 and 3 and according to one of Claims 4 and 5, **characterized by** the fact that the first means of fixation (27C, 27E) are located at the rear of the second and third means of fixation (27D, 29A), and cooperate with one face of the front and bottom portion (9) of the glass frame that is directed inward vehicle (1)

7. Door (5) according to claims 5 and 6, characterized as the lining (23) includes a rigid support (29) forming the notch (29A) and a leg (29B) supporting the second fastening means (27D).

8. Motor vehicle (1) consisting of at least one front door (5), characterized as the front door (5) conforms to one of claims 1 and 7, and a section of the trim (23) attached to the base (15) of the rear-view mirror (13) and hidden by that base (15) so that a front edge of that base (15) forms a finishing edge with adjacent front wing (3).

9. Process for assembling a front door (5) of a motor vehicle (1), characterized as the door (5) is in accordance with one of the claims 1 to 7, and the process includes the following steps:
- fitting of the lining (23) on the upper face of the door frame (5) and fixing of the lining (23) on an inner face of the front and bottom portion (9) of the glass frame;
- mounting and fixing of the mirror (13) on the front and bottom portion (9) of the glass frame;
- fixing of the lining (23) at the base (15) of the mirror (13).
